(19) Europäisches Patentamt
European Patent Office
Office européen des brevets

(11) **EP 2 140 958 B1**

(12) **EUROPÄISCHE PATENTSCHRIFT**

(45) Veröffentlichungstag und Bekanntmachung des Hinweises auf die Patenterteilung:
**01.11.2017 Patentblatt 2017/44**

(51) Int Cl.:
**B22F 9/24** *(2006.01)*     **B22F 1/00** *(2006.01)*
**A01N 25/04** *(2006.01)*     **A01N 59/16** *(2006.01)*
**A01N 59/20** *(2006.01)*

(21) Anmeldenummer: **09403001.2**

(22) Anmeldetag: **15.06.2009**

(54) **Verfahren zur Herstellung von Metallnanopartikeldispersionen**

Method for manufacturing metallic nanoparticle dispersions

Procédé de fabrication de dispersions de nanoparticules de métal

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **04.07.2008 DE 102008031310**

(43) Veröffentlichungstag der Anmeldung:
**06.01.2010 Patentblatt 2010/01**

(73) Patentinhaber: **Thüringisches Institut für Textil- und Kunststoff-Forschung e.V.
07407 Rudolstadt (DE)**

(72) Erfinder:
• **Gladitz, Michael**
  **07318 Saalfeld (DE)**
• **Reinemann, Stefan**
  **07407 Rudolstadt (DE)**

(74) Vertreter: **Plate, Jürgen et al
Plate Schweitzer Zounek
Patentanwälte
Rheingaustrasse 196
65203 Wiesbaden (DE)**

(56) Entgegenhaltungen:
**DE-A1- 10 323 597     US-B1- 6 224 898**

• **SONNY. S. MARK ET AL: "Self-Assembly of Dendrimer-Encapsulated Nanoparticle Arrays Using 2-D Microbial S-Layer Protein Biotemplates", BIOMACROMOLECULES, Bd. 7, Nr. 6, 1. Juni 2006 (2006-06-01), Seiten 1884-1897, XP055047469, ISSN: 1525-7797, DOI: 10.1021/bm0603185**

EP 2 140 958 B1

**Beschreibung**

Die Erfindung betrifft ein Verfahren zur Herstellung metallnanopartikelhaltiger Dispersionen, wobei sich die derart hergestellten Nanopartikeldispersionen durch eine sehr enge Partikelgrößenverteilung und eine hohe Stabilität und somit Lagerungsfähigkeit auszeichnen. Nach dem erfindungsgemäßen Verfahren hergestellte Dispersionen bzw. Suspensionen finden insbesondere in Form von Oberflächenschichten Verwendung und verleihen derart ausgerüsteten Oberflächen unter anderem deutlich antimikrobielle Eigenschaften.

Die erfindungsgemäßen Hybrid-Materialien basieren auf dendritisch, verzweigten bzw. hochverzeigten Makromolekülen respektive Polymeren als makromolekulare Träger für die eine antimikrobielle Funktion ausübenden Nanopartikel.

Es werden in einem Verarbeitungsschritt durch Reduktion der zuvor komplexierten Metallionen einer oder mehrerer geeigneter Metallverbindungen, ohne dass weitere Aufbereitungsschritte notwendig sind, die erfindungsgemäßen Metallnanopartikeldispersionen /-suspensionen erhalten, welche sich dadurch auszeichnen, dass selbst in hohen Konzentrationen keine Agglomeration der Nanopartikel (Primärpartikel) auftritt. Die erfindungsgemäßen Metallnanopartikeldispersionen lassen sich vorteilhaft mit nach dem Stand der Technik etablierten Nassbeschichtungsverfahren auf Materialien, wie Folien, Gewebe und dergleichen zu flexiblen, nanodimensionierten Hybridschichten applizieren oder können auch als Additive in geeignete Polymermatrices und Formulierungen inkorporiert werden.

**[Stand der Technik]**

Die vorliegende Erfindung betrifft ein Verfahren zur Herstellung nicht wässriger, unter anderem antimikrobiell wirkender Metallnanopartikeldispersionen / -suspensionen, wobei dendritische, in der Regel statistisch verzweigte Polymere bzw. Makromoleküle als Template, Träger und Stabilisatoren bzw. Komplexbildner genutzt werden. Die nach dem erfindungsgemäßen Verfahren hergestellten Dispersionen sind insbesondere für eine flexible, transparente, flächig applizierbare hydrophobe und unter anderem bakteriostatisch bzw. antibakteriell wirkende Beschichtung funktionell ausgerüsteter Materialoberflächen vorgesehen.

Bekanntermaßen ergeben sich wesentliche Probleme, nicht nur im Medizinsektor, aus den praktisch unvermeidbaren Nährböden für Bakterien und Keime, die zur Biofilmbildung und zum einen zur Freisetzung von für den Menschen belastenden bzw. schädlichen Bakterien und Keimen in die Umgebung führen können, zum anderen zur Schädigung des betreffenden Materials (Biokorrosion). So sind beispielsweise insbesondere alle Arten von Oberflächen im Krankenhauswesen in der unmittelbaren bzw. mittelbaren Umgebung von Patienten möglichst frei von Biofilmbildung zu halten. Weitere Beispiele sind im Bereich der alltäglichen Hygiene zu finden, aber auch Filter, Gehäuse und dergleichen, unter anderem in Lüftungs- und Klimaanlagen, stellen potentielle Quellen für den Austritt schädlicher Bakterien und Keime in die Umgebung und auf den Menschen dar. Es besteht deshalb das Bestreben, auf vielfältigen und verschiedenartigen Materialoberflächen eine entsprechende, unter anderem die Bildung von Biofilmen vermeidende bzw. hemmende Ausrüstung zu erlangen.

Es ist bekannt, dass unter der Einwirkung verschiedener Metallionen, wie beispielsweise von Kupfer, Zink oder Silber, welche unter dem Einfluss eines geeigneten Mediums leicht aus Metallpigmentoberflächen oder Legierungen austreten können, die Bildung und Vermehrung von Bakterien und Keimen wirksam verhindert bzw. gehemmt werden kann sowie - in welcher materiellen Form auch immer - Wundheilungsprozesse unterstützen können. Mit zunehmender Feinheit der Metallpartikel/-pigmente nimmt das Verhältnis von Oberfläche zu Volumen zu, wodurch ein Austritt von Metallionen erleichtert wird. Dadurch weisen Metallnanopartikel eine erhöhte Effektivität gegenüber herkömmlichen Metallpigmenten auf. Allerdings äußern sich derart große spezifische Oberflächen auch in einer erhöhten Tendenz durch Agglomeration / Reifung eben jene freie Partikeloberfläche zu verringern, wodurch der nanodisperse Zustand zusammenbricht und Produkte daraus nicht das Potential an Produkteigenschaften erreichen, wie es eine nanodisperse Verteilung der Funktionsadditive erwarten lässt.

US2003082133 und US6224898 zeigen auf, dass Dendrimere aufgrund ihrer strukturellen Besonderheit, ihres perfekt zentrosymmetrischen verzweigten Aufbaus, den daraus resultierenden Kavitäten im Inneren und einer hohen Dichte an funktionellen Gruppen, als makromolekulare Träger für Metallionen dienen können. Des weiteren können derartige Dendrimere als Template für die Darstellung von Metallnanopartikeln mit sehr enger Partikelgrößenverteilung fungieren, so dass eine erhöhte Kontrolle über die Größe und Stabilität gegenüber Agglomeration der resultierenden Nanopartikel erreicht wird. Hierbei wird bevorzugt von anorganischen mikrobioziden Wirkstoffen, insbesondere Silber bzw. dessen Salze, Gebrauch gemacht. Neben einem anorganischen Biozid, insbesondere Salze des Silbers, wird in US2003082133 weiterhin eine Modifizierung zumindest eines Teils an terminalen Gruppen des Dendrimers mit einem organischem Biozid beschrieben. Die Anwendung der Materialien und Verfahren ist jedoch insbesondere durch die Verwendung von nur durch aufwendige mehrstufige Synthesen darstellbare, hochpreisige Dendrimere limitiert. Die komplexe und ineffiziente Synthese von monodispersen Dendrimeren stellt somit eine Barriere für deren technische und kommerzielle Verwendung in Werkstoffanwendungen dar.

Wie in DE10323597 dargelegt wird, sind auch weniger perfekte, dendritisch verzweigte Polymere respektive Makromoleküle in der Lage, als Träger und Template für Metallnanopartikel zu fungieren. Es werden durch Komplexbildung und anschließende homogene Reduktion der komplexierten Metallionen-Hybridmaterialien, nanoskalige Kupfer- oder Silberpartikel enthaltend, beschrieben. Durch die Modifizierung-zumindest eines Teils der insbesondere terminalen funktionellen Gruppen der zugrundeliegenden dendritisch verzweigten Makromoleküle wird zudem ein einfaches Auswaschen bzw. Ausbluten der durch die erfindungsgemäßen dendritschen Makromoleküle hüllenartig umschlossenen Metallnanopartikel unterbunden und gleichsam eine erhöhte Haftung zu Substratmaterialien aus Glas erreicht. Zur Darstellung der nanopartikulären Metall-Polymer-Hybride wird eine Reduktion der zuvor im verzweigten Makromolekül komplexierten Metallsalze in einem aprotischen Lösungsmittel unter Wasserausschluss mit mindestens einem Lithiumborhydrat als Reduktionsmittel betrieben. Ein derartiges Verfahren ist aufgrund des zu realisierenden Wasserausschlusses durch einen vergleichsweise hohen technischen Aufwand geprägt und zudem durch schwierig und nur unter bestimmten Schutzvorkehrungen zu lagernde und zu handhabende Chemikalien in seiner Anwendbarkeit und Ausbaufähigkeit limitiert. Zudem führt das beschriebene Verfahren der Metallnanopartikelsynthese durch homogene Reduktion dazu, dass verfahrensbedingt entsprechende Reduktionsmittelreste im Produkt verbleiben oder nur mit hohem Aufwand durch zusätzliche Prozessschritte entfernt werden können, worin unter anderem die vergleichsweise geringe Stabilität derart hergestellter Verfahrensprodukte begründet sein kann.

Auch bei dem von Sonny. S. Mark u.a. in Biomacromolecules, Bd. 7, Nr.6, 1844 ff. beschriebenen Verfahren zur Synthese von Dendrimeren mit polymeren Makromolekülen als Träger von Pt-Nanopartikeln wird die Reduktion in homogener Phase vorgenommen (entionisiertes Wasser) und sind zusätzliche Aufbereitungsschritte notwendig, um Lösungs- und ReduktionsMittelreste aus den erhaltenen Dendrimer-Metall-Nanopartikeln zu entfernen.

Wie der dargelegte Stand der Technik erkennen lässt, kann durch Ausrüstungen mit Metallpigmenten, vorzugsweise des Silbers; besonders mit Metallnanopartikeln, insbesondere durch Beschichtungen in vielen Fällen eine effiziente Funktionalisierung von Materialien erreicht werden, ohne dass dabei die Eigenschaften des Grundwerkstoffes maßgeblich beeinflusst werden. Im Gegensatz dazu führt selbst die Inkorporation von nanoskaligen Metallpigmenten meist zu einer dem Fachmann bekannten unerwünschten charakteristischen Färbung der Polymerkompositionen, was nicht zuletzt oftmals durch Nanopartikelagglomerate verstärkt wird. Die resultierenden Metallnanopartikel-Cluster/-Aggregate tragen zu den bekannten Verfärbungen im Licht des sichtbaren Wellenlängenbereiches bei. Auch führt die Ausrüstung allein mit Silber, in welcher Form auch immer, zwar zu antibakteriellen bzw. bakteriostatischen, jedoch in der Regel nicht zu hinreichend fungiziden Eigenschaften der ausgerüsteten Materialien. Eine breitbandige antimikrobielle Wirkung, wie sie in herkömmlichen Verfahren bislang nicht darstellbar ist, ist jedoch oft erwünscht. Das antimikrobielle Wirkspektrum kann durch Kombinationen verschiedener Metallnanopartikel, zum Beispiel von Kupfer und Silber, erweitert und an applikationsspezifische Erfordernisse angepasst werden. Ein Verfahren zur Darstellung derartiger Nanopartikelkombinationen mit einer stabilen und engen Partikelgrößenverteilung ist somit wünschenswert.

### [Aufgabe der Erfindung]

Im Hinblick auf den dargestellten Stand der Technik und ausgehend von den bekannten Erkenntnissen bestand die Aufgabe ein möglichst einfaches und zum Ausbau befähigtes Verfahren zur Darstellung von stabilen Metallnanopartikeldispersionen bereitzustellen. Das Verfahren soll auch für die gleichzeitige Darstellung von Kombinationen aus Metallnanopartikeln geeignet sein, wobei diese eine enge Größenverteilung aufweisen sollten. Das Verfahrensprodukt soll stabil gegenüber Agglomeratbildung sein. Zudem sollte es unter anderem für die Aufbringung zur Ausrüstung von Oberflächen, insbesondere Polymeroberflächen, in besonderem Maße geeignet sein. Dabei soll eine derartige Ausrüstung zu keiner negativen Beeinflussung bzw. wesentlichen Änderung physikalischer Eigenschaften, wie optische und Transparenzeigenschaften und mechanischer Eigenschaften des Substratwerkstoffes führen. Weiterhin sollten die für das erfindungsgemäße Verfahren verwendeten Materialkompositionen unter anderem eine einfach zu realisierende Steuerung der Freisetzungsrate an Ionen metallisch nanoskaliger Partikel unterschiedlicher Art erlauben, wie es für die antimikrobielle, wie auch insbesondere für eine bakteriostatische oder bakterizide Ausrüstung von Materialien, vorzugsweise Oberflächen, für eine nachhaltige Darstellung der Funktionseigenschaften angestrebt wird. Dieser Aspekt ist von Bedeutung, da vielfach bei Polymer-Nanocomposite-Materialien, ausgerüstet mit nanodispersen Metallpigmenten als antimikrobiellem Wirkstoff, ein Ausbluten der Nanoteilchen aus oberflächennahen Bereichen zu beobachten ist, es bildet sich ein Hemmhof im Agar-Diffusionsplattentest aus, weshalb auf eine zunächst starke Hemmung des Bewuchses mit Mikroorganismen, insbesondere Bakterien und Pilze, eine rasche Besiedlung derartiger Materialoberflächen folgt, da diese an Wirkstoff verarmt sind, wodurch die antimikrobielle Ausrüstung verloren geht.

Diese Aufgabe wird durch die Verwendung dendritisch verzweigter Makromoleküle als Template und Trägermaterial und durch die Einbringung und Reduktion der Metallionen in nur einem einzigen Verfahrensschritt gelöst. Dabei ist ein Vorteil des Verfahrens, dass insbesondere Metallionen verschiedener Metallverbindungen gleichzeitig in nur einem Schritt durch Reduktion in stabile Metallnanopartikeldispersionen überführt werden können, wodurch Produkte mit kombinatorischen Eigenschaften, wie ein breitbandiges antimikrobielles Wirkungsspektrum, zugänglich sind. Die erfindungsgemäßen Formulierungen und daraus hergestellte Produkte haben als Basis dendritisch verzweigte Makromoleküle, bevorzugt hoch- bzw. hyperverzweigte Makromoleküle respektive Polymere, wie sie in großer Variationsbreite leicht und im Vergleich zu Dendrimeren kostengünstig herstellbar sind. Geeignete verzweigte Makromoleküle tragen 10 bis 300, bevorzugt 50 bis Makromoleküle tragen 10 bis 300, bevorzugt 50 bis 200 gleichder verschiedenartige endständige funktionelle Gruppen, insbesondere Hydroxyl-, Amino- oder Carboxylgruppen.

Dabei finden bevorzugt kommerziell verfügbare dendritisch verzweigte bzw. hyperverzweigte Makromoleküle, wie sie beispielsweise in den Patentschriften US 3425549 oder DE60006373 von 1969 bzw. 2004 beschrieben sind, Anwendung. Diese dendritisch verzweigten Makromoleküle haben im Gegensatz zu ihren perfekt symmetrisch aufgebauten Dendrimerpendanten Polydispersitäten größer eins und typischerweise kleiner drei. Die Verzweigungsstruktur ist demnach nicht ideal perfekt zentrosymmetrisch wie bei Dendrimeren, sondern ist in der Regel von statistischer Natur mit einem Verzweigungsgrad kleiner 100%. Durch diese statistisch verteilten Fehlstellen (lineare Einheiten) in der Makromolekularstruktur treten im Vergleich zu ihren Dendrimerpendanten nicht nur terminale, primäre Funktionalitäten, sondern zusätzliche reaktive Stellen, wie beispielsweise sekundäre Amine oder Hydroxylgruppen im Inneren des dendritischen Polymergrundgerüstes auf. Das Molekulargewicht ist in Analogie zu Dendrimeren abhängig von deren pseudo-Generation und liegt typischerweise zwischen 800 und 100.000, vorzugsweise größer oder gleich 2.500. Beispiele für solche Makro-moleküle sind verzweigte Polyethylenimine mit endständigen Aminogruppen, wie sie beispielsweise von der Firma BASF (D) unter der Bezeichnung Lupasol vertrieben werden, verzweigte Polyesteramide der Firma DSM (NL), unter der Bezeichnung Hybrane vertrieben, oder auch verzweigte aliphatische Polyester mit endständigen Hydroxylgruppen, wie sie von der Firma Perstorp (SE) unter der Bezeichnung Boltorn vertrieben werden. Für das erfindungsgemäße Verfahren zur Darstellung von langzeitstabilen Metallnanopartikeldispersionen, wie auch insbesondere deren Applizierung als flächig ausbildbare Funktionsschichten, welche vorzugsweise unter anderem eine die Biofilmbildung und das Bakterienwachstum hemmende Wirkung ausüben können, sind die hydrophilen und zum Teil wasserlöslichen dendritisch verzweigten Makromoleküle zunächst durch Modifizierung vorrangig endständiger Gruppen in eine sogenannte Kern-Schale-Architektur zu überführen. Die so abgewandelten amphiphilen dendritisch verzweigten Makromoleküle sind in ihrem Lösungsverhalten quasi inversen Micellen gleich. Eine derartige Modifizierung der zugrundeliegenden dendritsch verzweigten Makromoleküle kann auf einfache Art und Weise, wie aus der Dissertationsschrift von M. Krämer (Albert-Ludwigs-Universität Freiburg i. Br., 2004) bekannt, durch die kovalente Modifizierung vorzugsweise reaktiver terminaler Gruppen erfolgen. In einer bevorzugten Ausführungsform wird eine derartige Modifizierung der Endgruppen mit geeigneten linearen oder auch verzweigten Alkylketten einer Länge zwischen 4 und 18 Kohlenstoffatomen in Masse durchgeführt. Alternativ kann die Modifikation auch in Lösung, wie in der o.g. Quelle unter anderem dargelegt, durchgeführt werden. Das Produkt ist ein dendritisch verzweigtes amphiphiles Makromolekül mit einer Kern-Schale-artigen Architektur.

In einer weiteren und besonders einfachen Ausführungsform wurde überraschenderweise gefunden, dass auch eine nicht kovalente amphiphile Modifizierung unter bestimmten Umständen für das erfindungsgemäße Verfahren, wie auch unter anderem für die Darstellung entsprechender Ausrüstungen zur Funktionalisierung von Materialoberflächen geeignet sein kann. Dazu werden die Komponenten (a) das dendritische Makromolekül (="Kern") gemeinsam mit dem entsprechenden Modifikator (b), beispielsweise eine lineare oder verzweigte Carbonsäure mit einer Kettenlänge zwischen 4 und 18 Kohlenstoffatomen (="Hülle"), im entsprechendem Verhältnis vorgelegt und in einem für das erfindungsgemäße Verfahren geeigneten Lösungsmittel unter Rühren bei Raumtemperatur oder leicht erhöhter Temperatur, typischerweise nicht über 50°C, gemeinsam gelöst.

Durch inverse Micellbildung entsteht ein Polyelektrolyt-Surfactant-Complex wodurch die sonst in den verwendeten unpolaren Lösungsmitteln weitgehend unlöslichen dendritisch verzweigten Makromoleküle in einen Lösungszustand überführt werden.

Gemäß einer Ausführungsform wird ein dendritisch verzweigtes Makromolekül mit einem Modififizierungsgrad zwischen 25% und 100% bezogen auf den theoretischen Gehalt an terminalen funktionellen Gruppen des zugrundeliegenden dendritischen Makromoleküles eingesetzt. Dabei ist ein unmittelbarer Zusammenhang zwischen Modifizierungsgrad, Alkylkettenlänge des Modifizierungsreagenz und der Freisetzungsrate an Metallionen der hüllenartig komplexierten Metallnanopartikel zu beobachten, was essentiell für die Ausrüstung von Produkten mit insbesondere das Bakterienwachstum hemmenden Eigenschaften durch Applizieren der erfindungsgemäßen Metallnanopartikeldispersionen ist, da hierdurch ein Auswaschen der Nanopartikel unterbunden wird, jedoch nicht eine Freisetzung von Metallionen aufgrund der amphiphilen Eigenschaften.

Für das erfindungsgemäße Verfahren geeignete Lösungsmittel zeichnen sich dadurch aus, das diese zum einen nicht oder nur sehr geringfügig mit polaren Lösungsmitteln, insbesondere Wasser, mischbar sind und zum anderen gegenüber dem amphiphilen dendritisch verzweigten Kern-Schale-Makromolekül eine hinreichende Löslichkeit aufweisen. Beispiele für derartige Lösungsmittel sind vorzugsweise organische Lösungsmittel, wie beispielsweise Toluol, Chloroform, Xylol, Hexan oder Ethylacetat in gewöhnlicher Analysequalität. Denkbar sind auch weitere Lösungsmittel, wie Öle, zum Beispiel Silikonöle, oder Gemische, insbesondere dann, wenn sich daraus ein Vorteil im Hinblick auf die Ausgestaltung der Applikation der nach dem erfindungsgemäßen Verfahren erlangten Metallnanopartikeldispersionen ergibt.

Für das erfindungsgemäße Verfahren wird zunächst eine entsprechende Lösung A des dendritisch verzweigten amphiphilen Kern-Schale-Makromoleküles in einem geeigneten Lösungsmittel durch Auflösen unter Rühren in einem zweckmäßigen und in der Regel geschlossenen Arbeitsgefäß unter Normalatmosphärenbedingungen hergestellt. Die Konzentration der Lösung liegt dabei vorzugsweise zwischen 0,25g/Liter und 250g/Liter. Im folgenden Schritt wird mindestens eine Metallverbindung unter Komplexbildung in der Lösung A unter Rühren gelöst. Bei der Metallverbindung handelt es sich bevorzugt um Salze von Silber, Gold, Zink und / oder Kupfer oder Mischungen daraus. Auch andere Metallsalze, wie beispielsweise Salze von Platin, Nickel, Cadmium, Palladium, Eisen oder Rhodium sowie jegliche Kombinationen daraus sind angesichts der Ausgestaltung der nachfolgenden Applikation der Nanopartikeldispersionen denbar. Alternativ zu Metallsalzen kommen als Metallverbindungen auch Metallkomplexverbindungen in Betracht, dadurch gekennzeichnet, dass diese eine geringere Stabilität als die Komplexe mit dem dendritisch verzweigten Makromolekül aufweisen (Ligandenaustauschreaktion). Die Komplexierungskapazität der verwendeten zugrundeliegenden dendritisch verzweigten respektive verzweigten Makromoleküle ist abhängig von der bevorzugten Koordinationszahl der Metallionen und der Anzahl komplexierend wirkender funktioneller Gruppen, wie Stickstoff-, Carboxyl- und / oder Hydroxylgruppen im dendritischen Makromolekülgrundgerüst. Im Allgemeinen bevorzugt ist ein molares Verhältnis von Metallionen zu komplexierenden Gruppen zwischen 1 : 2 und 1 : 32.

Im Anschluss an das Auflösen mindestens einer Metallverbindung erfolgt die gleichzeitige Reduktion der komplexierten Metallionen nach dem erfindungsgemäßen Verfahren an der Grenzfläche zweier zur Ausbildung eines quasistationären Zweiphasensystems befähigten Flüssigkeitsphasen A und B, wobei eine der Phasen vorzugsweise eine wässrige Phase ist. Hierzu ist ein geeignetes Reduktionsmittel, besonders eine komplexe Metallhydridverbindung, insbesondere Natriumborhydrid, frisch in destilliertem Wasser zu lösen (Lösung B) und unmittelbar darauf mit der organischen Phase (Lösung A), welche den dendritisch verzweigten amphiphilen Makromolekül-Metallionen-Komplex enthält, durch Zusammenführen (Überschichten) beider Lösungen in Kontakt zu bringen. Die eingesetzte Konzentration an Reduktionsmittel liegt typischerweise bei einem molaren Verhältnis von Metallion zu Reduktionsmittel zwischen 1 : 0,5 und 1 : 10. Weitere geeignete Reduktionsmittel sind, neben Metallhydridverbindungen, insbesondere Natriumborhydrid, unter anderem auch Salze (Sulfit, Phosphit, Nitrit, Bromit) reduzierender Säuren, welche sich ebenfalls dadurch auszeichnen, dass auch deren Oxidationsprodukte gut wasserlöslich sind, wodurch verfahrensbedingt vorteilhafter Weise die erhaltenen Metallnanopartikeldispersionen weitgehend frei von Reduktionsmittelresten und Nebenprodukten sind, da derartige Verunreinigungen beispielsweise als Keimbildner die Ausfällung / Instabilität von Nanopartikeldispersionen befördern können.

Die eintretende Reduktionsreaktion der komplexierten Metallionen kann an einer deutlichen, zeitlich fortschreitenden und charakteristischen Farbveränderung der organischen Phase (Lösung A) verfolgt werden. Ein Auswaschen der Metallverbindung beziehungsweise der Metallionen in die vorzugsweise wässrige Phase (Lösung B) bzw. Phasengrenze findet nicht statt. Ein für die stabilisierte Nanopartikelspezies spezifischer Farbumschlag findet nach Zusammenführen beider Phasen infolge der ablaufenden chemischen Reduktion der komplexierten Metallionen nur in der organischen Phase (Lösung A) statt. Die Reduktionsreaktion zur Überführung der Metallionen in ihre metallische Form findet dabei typischer Weise bei einer Temperatur im Bereich zwischen -25°C und unterhalb der Siedetemperatur der niedriger siedenden Phase statt. Zur Unterstützung der Reduktionsreaktion an der Phasengrenze der beiden Lösungen A/B kann leicht gerührt werden. Hierdurch kann möglichen Konzentrationsgradienten auf beiden Seiten der Phasengrenze entgegengewirkt werden. Ein besonderer Vorteil dieses Verfahrens liegt zum einen darin begründet, dass die Reduktionsreaktion a)im Vergleich zu alternativen nasschemischen Reduktionsverfahren, z.B. mit reduzierenden Gasen, wie Wasserstoff oder Kohlenmonoxid(Reaktionszeiten typischerweise 48h und länger) sehr schnell verläuft, b)die Reduktionszeit durch einfaches Trennen der Phasen exakt steuerbar ist und c)die nach dem erfindungsgemäßen Verfahren hergestellten Metallnanopartikeldispersionen in hoher Ausbeute erhalten werden und ohne weitere Aufarbeitungsschritte unmittelbar weiterverarbeitet werden können, da diese weitgehend frei von Reduktionsmittelresten und Nebenprodukten anfallen, sowie d) alle notwendigen Verfahrensschritte in einer einfachen Apparatur durchgeführt werden können. Ferner zeichnen sich die nach dem erfindungsgemäßen Verfahren erhaltenen amphiphilen und nicht oder nur geringfügig in polaren Lösungsmitteln löslichen oder mischbaren Produkte insbesondere durch eine hohe Lagerungsfähigkeit und Stabilität im Vergleich zu durch homogene Reduktion von komplexierten Metallionen, wie Lithiumtriethylborohydrid(Superhydrid), in organischen Lösungsmitteln erhaltene vergleichbare Metallnanopartikeldispersionen aus. Weil bei chemischen Reduktionsverfahren im allgemeinen mit Reduktionsmitteln im Überschuss gearbeitet wird, sind im Fall der homogenen Reduktionsmethode, dadurch dass die Reaktanten nicht nach Reduktion der Metallionen getrennt werden können, unerwünschte Nebenreaktionen nicht auszuschließen, was Grund für eine geringere Stabilität der auf diesem herkömmlichen Wege erhaltenen Metallnanopartikeldispersionen sein kann und ein wesentlicher Nachteil in Anbetracht produktionsspezifischer Anforderungen an Zwischenprodukte ist. Diese Nachteile werden durch das erfindungsgemäße Verfahren ausgeschlossen.

In einer vorteilhaften Ausführungsform des erfindungsgemäßen Verfahrens wird die organische Phase, das gelöste amphiphile, dendritisch verzweigte Makromolekül enthaltend, mit der darin aufgelösten Metallverbindung bzw. -verbindungen (Lösung A) vor dem Zusammenführen mit der vorzugsweise wässrigen, das Reduktionsmittel enthaltenden Phase (Lösung B) mit Stickstoff oder einem anderem Inertgas gespült.

In einer weiteren Ausführungsform wird während der Reduktionsreaktion zur Überführung der komplexierten Metallionen in ihre elementare metallische Form an der Phasengrenze eines Zweiphasensystems der Reaktionsraum mit Stickstoff bespült.

Ein weiteres Merkmal des erfindungsgemäßen Verfahrens ist, dass sich das bevorzugte Reduktionsmittel Natriumborhydrid nur vergleichsweise langsam in polaren Medien, insbesondere Wasser, zersetzt (Lösung B), so dass die Reaktion gut kontrollierbar ist. Weiterhin kann die Reaktionsgeschwindigkeit anhand des Verhältnisses von Volumen der Phasen zur Grenzfläche beeinflusst werden, wobei im Allgemeinen eine große Phasengrenze eine schnellere, eine kleine Phasengrenze eine langsamere vollständige Reduktion der komplexierten Metallionen befördert. Typischerweise liegen die Reaktionszeiten zwischen 10 Minuten und 90 Minuten. Die Reaktion wird durch einfaches Trennen des zweiphasigen Reaktionsgemisches beendet.

In einer besonderen Ausgestaltung des erfindungsgemäßen Verfahrens kann die Trennung des Reaktionsgemisches durch eine entsprechende vergleichsweise einfache Apparatur, zum Beispiel einen Scheidetrichter, ein wannen- oder auch ein zylinderförmiges Glasgefäß mit Bodenauslass oder dergleichen erfolgen, wobei Produktausbeuten an Metallnanopartikeldispersion von typischerweise größer 90%, bezogen auf das Gesamtvolumen der eingesetzten organischen Phase (Lösung A), zu realisieren sind.

Die aus dem Verfahren resultierende erfindungsgemäße Metallnanopartikeldispersion, welche die metallischen Nanopartikel mit einer Partikelgröße vorzugsweise zwischen 1 nm und 10 nm, insbesondere unter anderem bakteriozid und / oder fungizid wirkende Metallnanopartikel, wie Silber, Gold, Kupfer, Zink oder Kombinationen daraus, in komplexierter elementarer Form innerhalb eines Kern-Schale-artig aufgebauten amphiphilen dendritisch verzweigten Makromoleküles enthalten, sind - in Abhängigkeit von ihrer Zusammensetzung - stabil für etliche Tage bis Monate im Vergleich zu teilweise nur für wenige Stunden stabilen Nanopartikeldispersionen respektive -suspensionen, hergestellt nach herkömmlichen Verfahren, was ein wesentlicher Vorteil gegenüber anderen nasschemischen Methoden zur Darstellung von Metallnanopartikeln als Komponente für polymerbasierte Formulierungen ist.

Bevorzugt wird das nach dem erfindungsgemäßen Verfahren erhaltene Hybridkomplex-Material auf Oberflächen insbesondere in Form einer Lösung appliziert. In einer besonders bevorzugten Ausführungsform werden die nach dem erfindungsgemäßen Verfahren hergestellten antimikrobiellen Metallnanopartikeldispersionen , welche das amphiphile dendritisch verzweigte Makromolekül-Metall-Hybridmaterial enthalten, in Form einer Lösung von außen auf geeignete Oberflächen als mindestens ein Teil einer funktionellen Ausrüstung aufgebracht. Dabei können alle dem Stand der Technik nach bekannten Verfahren, besonders Nassbeschichtungsverfahren, wie Schleuder-, Tauch- oder Rakelverfahren aber auch Sprühverfahren, zur Anwendung kommen.

Die Aufbringung der Nanopartikeldispersionen insbesondere in Form einer Lösung auf Oberflächen umfasst auch solche, welche als innere Oberflächen im auszurüstenden Produkt vorliegen. Diese können beispielsweise durch sphärische, plättchen- oder faserförmige Füllstoffe, wie Talkum, Holz, Glasfasern, Cellulosederivate oder dergleichen ebenso, wie auch andere Additive verkörpert sein. Die Resorption, Absorption und / oder Adsorption kann durch einfache dem Stand der Technik nach bekannte Mischtechniken, zum Beispiel Rührwerke, Taumelmischer, realisiert werden.

Gemäß einer weiteren Ausführungsform können auch Kombinationen unterschiedliche Metallnanopartikel enthaltenden Dispersionen zur Ausrüstung von Produkten Anwendung finden. Hierdurch ist ein breites Spektrum an gewünschten Eigenschaftskombinationen zu erlangen. Dies kann durch Vereinigung jeweils nach dem erfindungsgemäßen Verfahren hergestellter Nanopartikeldispersionen unterschiedlicher Metalle vor der Applikation erfolgen. Daneben wurde jedoch überraschenderweise gefunden, dass insbesondere Kombinationen der beschriebenen erfindungsgemäßen Metallnanopartikel-Hybrid-Materialien mit Metalloxid- bzw. Oxydhydroxydnanopartikel-Hybrid-Materialien ein hohes Eigenschaftspotential aufweisen. Hierzu wird in einer Lösung eines dendritisch verzweigten Polymers, welches sowohl amphiphil-modifiziert als auch unmodifiziert vorliegen kann und vorzugsweise hydroxyl-, carboxyl- und / oder stickstoffhaltige Gruppen enthält eine entsprechende Metallprecursorverbindung, vorzugsweise von Titan, Zink, Cer oder Aluminium, insbesondere in Form eines Alkoholates, gelöst. Dabei kommt die Tendenz der Komplexbildung der Metalloxylate mit zumindest einer chemischen Gruppe des zugrundeliegenden dendritisch verzweigten Makromoleküls dadurch zum Ausdruck, dass die derart erhaltenen Sole, ohne dass wasserfreie Lösungsmittel oder andere Stabilisierungsmaßnahmen verwendet werden müssen, keinerlei Ausfällung aufweisen und auch nicht zur Lyogelbildung neigen. Die eigentliche Kombination der Nanopartikel-Hybride kann entweder durch die schichtweise Abfolge der Applizierung der entsprechenden Nanopartikeldispersionen erfolgen (mehrschichtig aufgebaute Oberflächenfunktionalisierung), als auch bei Wahl geeigneter, zumindest teilweise miteinander mischbarer Lösungsmittel durch ein Mischen der erfindungsgemäßen Metallnanopartikeldispersion mit dem Sol vor dem eigentlichen Applizieren der antimikrobiellen Ausrüstung (monolagig, mehrphasig aufgebaute Oberflächenfunktionalisierung). Bevorzugt wird die Kombination aus den nach dem erfindungsgemäßen Verfahren erhaltenen Hybridkomplex-Material und einem Metalloxid-Sol auf zumindest einem Teil einer Oberfläche insbesondere in Form von Lösungen nass in nass bzw. nach einem Zwischentrocknungsschritt oder auch in Form eines Lösungsgemisches appliziert.

Den Kombinationen an Metallnanopartikel- und Metalloxidnanopartikel-Hybriden liegen dabei mindestens ein amphiphil modifiziertes dendritisch verzweigtes Makromolekül, vorzugsweise mehrere in ihrem chemischen Aufbau, Molekülgröße (Molekulargewicht) und / oder Art der amphiphilen Modifizierung unterschiedliche dendritsch verzweigte Makromoleküle zugrunde, wobei die Nanopartikel jeweils im Inneren (intramolekular) eines dendritisch verzweigten Makromoleküls oder aber an den äußeren Verästelungen der dendritsch verzweigten Arme der Makromoleküle bzw. zwischen solchen (intermolekular) lokalisiert sind. Derartige Hybridkombinationen sind dadurch gekennzeichnet, dass sie neben Metallnanopartikeln, insbesondere nanodisperse Metalloxide bzw. -oxydhydroxide von Titan, Zink, Cer und/oder Silizium umfassen, welche durch Hydrolyse und Kondensation der vorzugsweise Metallalkoholate in Gegenwart von Feuchtigkeit bei der Herstellung der Produkte, insbesondere in Form von Oberflächenschichten, bzw. in einem separaten Verarbeitungsschritt gebildet werden. Dabei kann die Hydrolyse und Kondensation unter anderem durch kurzzeitiges Auslagern der beschichteten Produkte bzw. Zwischenprodukte in Wasser oder aber auch durch Fluten, Tauchen, Sprühen bzw. unmittelbar bei der Trocknung der applizierten Schichten unter erhöhter Luftfeuchte erfolgen. Hierdurch erlangen die Oberflächenausrüstungen neben einer antimikrobiellen Aktivität infolge des erfindungsgemäß erlangten Metallnanopartikel-Hybrid-Materials weitere vorteilhafte Eigenschaften in Abhängigkeit der Formulierungszusammensetzung, wie eine erhöhte Abrasionsbeständigkeit und eine erhöhte Benetzbarkeit gegenüber polaren Medien, beispielsweise Wasser, bei unverändert hoher optischer Transparenz im sichtbaren Wellenlängenbereich. Durch Absorption und Streuung bestimmter Wellenlängen des elektromagnetischen Wellenlängenspektrums können die Zusätze an Metalloxid- bzw. Metalloxidhydroxyd-Nanopartikeln nicht zuletzt als physikalische UV-Filter wirken und gleichzeitig eine Entspiegelung der hochtransparenten Schichten hierdurch erreicht werden. Dadurch kann die Ausrüstung neben einer Antimikrobiellfunktion gleichzeitig die Funktion einer UV-Schutzschicht übernehmen.

Geeignete Substrat- bzw. Matrixmaterialien sind vorzugsweise ungefüllte oder gefüllte Polymerwerkstoffe. Folgende Polymerklassen finden bevorzugt Verwendung: Polyolefine, Vinylpolymere, Elastomere, Polykondensate, ebenso wie duroplastische Polymerwerkstoffe oder abgewandte Naturstoffe, deren Derivate und Copolymere. Typische Vertreter sind Polypropylene, Polyethylene, Polyvinylchloride, Polyamide, Polyimine, Polyester, Polycarbonate, Polyoxymethylen, Polyacrylnitrile, Polyetherketone, Polyethersulfone, Polyurethane, Epoxide oder Cellulose und deren Derivate, Copolymerisate oder Blends und dergleichen. Insbesondere als Substratmaterialien finden hierfür Verwendung thermoplastische Polymere aus der Familie der Polyester, wie beispielsweise Polyethylenterephthalat. Dabei kann der Substratwerkstoff in Form eines Bauteils, Fasern, Filamenten, flächigen Strukturen, wie Folien, Platten, Gewebe, Vlies, Leder oder dergleichen vorliegen.

Mit Vorteil sind die nach dem erfindungsgemäßen Verfahren hergestellten Metallnanopartikeldispersionen bei Raumtemperatur zu verarbeiten, wobei sich in Abhängigkeit des gewählten Lösungsmittels oder etwaiger weiterer Zusätze zumindest ein entsprechender Trocknungs- bzw. Zwischentrocknungsschritt anschließt. Die derart hergestellten oberflächlichen Ausrüstungen von insbesondere Polymermaterialien, erlangen durch Wechselwirkungskräfte der amphiphil modifizierten dendritischen Makromoleküle mit der Oberfläche des vorzugsweise polymeren Substrates eine hinreichend stabile Verbindung, wodurch kein einfaches Ablösen, z.B. durch Abwischen, - waschen oder Auslagern in wässrigen Medien erfolgt, so dass Produkte mit einer langfristig wirksamen, flexiblen, hydrophoben und transparenten Ausrüstung geschaffen werden können. Gemäß einer weiteren Ausführungsform können den nach dem erfindungsgemäßen Verfahren hergestellten Metallnanopartikeldispersionen weitere Hilfsmittel zugesetzt werden, um unter anderem zum Beispiel haftungsverbessernde und / oder andere Gebrauchseigenschaften der Produkte zu entfalten. Beispiele sind unter UV-Einstrahlung vernetzende Systeme und / oder typische Substanzen, wie sie in Klebstoffformulierungen Anwendung finden. Ebenso können haftungs- und kompatibilitätsverbessernde Eigenschaften durch Aufbringen von Primern vor dem Applizieren der Hybridkomplex-Metallnanopartikel-Materialien von außen auf mindestens einem Teil einer geeigneten Materialoberfläche ausgebildet werden. Dabei sind koordinative und / oder kovalente Wechselwirkungen von insbesondere terminalen Gruppen der zugrundeliegenden dendritisch verzweigten Makromoleküle mit reaktiven Gruppen von beispielsweise bifunktionalen Monomeren, Oligomeren oder Makromolekülen, welche Bestandteil von Zusatzstoffen sind oder funktionellen Gruppen von beispielsweise Primerschichten möglich, wodurch ein hohes Potential der Haftungsausbildung zu verschiedensten Materialien darstellbar ist.

Das erfindungsgemäße Verfahren wird leicht und komfortabel an gewünschte Verarbeitungsbedingungen und zu realisierende Produkteigenschaften zum Beispiel durch eine entsprechende angepasste Modifizierung eines oder unterschiedlicher verwendeter dendritisch verzweigter Makromoleküle, die Abfolge des Schichtaufbaus oder auch die Auswahl des Lösungsmittels, in Bezug auf dessen Kompatibilität zu insbesondere Polymermaterialien oder weiteren Zusätzen angepasst.

Die Dicke der mindestens ein nanoskaliges metallisches Pigment in Form eines Hybridkomplex-Materials enthaltenden Oberflächenausrüstung liegt vorzugsweise zwischen 5 und 2000nm, insbesondere zwischen 25 und 500nm. Dabei liegen die Metallnanopartikel nanodispers ohne Clusterbildung vor, wodurch hochtransparente Schichten erhalten werden können.

In einer weiteren Ausführungsform wird das nach dem erfindungsgemäßen Verfahren erhaltene Metallnanopartikel-Hybridkomplex-Material zur Herstellung entsprechend modifizierter Produkte direkt in den Produktwerkstoff inkorporiert, wobei die Zugabe insbesondere in Form einer Lösung bei der Herstellung entsprechender Produkte erfolgt. Zur Einarbeitung der dendritischen Nanopartikel-Hybrid-Materialien kommen besonders Verfahren wie Quellen, Auflösen oder In-situ-Polymerisation, ebenso wie Extrusionsverfahren in Frage.

Die Erfindung wird nachfolgend anhand einiger Ausführungsbeispiele beschrieben, welche den Erfindungsgedanken erläutern sollen, ohne ihn einzuschränken.

Figurenbeschreibung

Fig.1 typische UV/Vis-Absorptionsspektren einer nach dem erfindungsgemäßen Verfahren hergestellten lagerstabilen Silbernanopartikelsuspension

Fig. 2: transmissionselektronenmikroskopische Aufnahme eines Querschnitts einer ca. 100nm dicken Nanosilberpartikel enthaltenden Beschichtung (1) auf einem Polyesterfoliensubstrat (2), eingefügtes Diagramm stellt die Partikelgrößenverteilung im abgebildeten Querschnittsbereich dar

Fig. 3: repräsentative atomkraftmikroskopische Aufnahmen der Oberflächentopografie einer Beschichtung mit hydrophoben Merkmalen (b) im Vergleich zur unbeschichteten PET-Substratoberfläche (a), sowie einer Hybridschicht Silber- und Titanoxidnanopartikel enthaltend (c)

Fig. 4: Benetzungsverhalten einer gemäß Beispiel 2 antimikrobiell ausgerüsteten Oberfläche (II) im Vergleich zu einer Hybridschicht gemäß Beispiel 8, umfassend Silber- und Titanoxidnanopartikel (III), sowie der unbeschichteten PET-Substratoberfläche (I) gegenüber Wasser

**[Beispiele]**

Beispiel 1: Reduktion von Metallionen der komplexometrisch in einer Lösung eines ämphiphilen dendritisch verzweigten Makromoleküles aufgelösten Metallverbindung

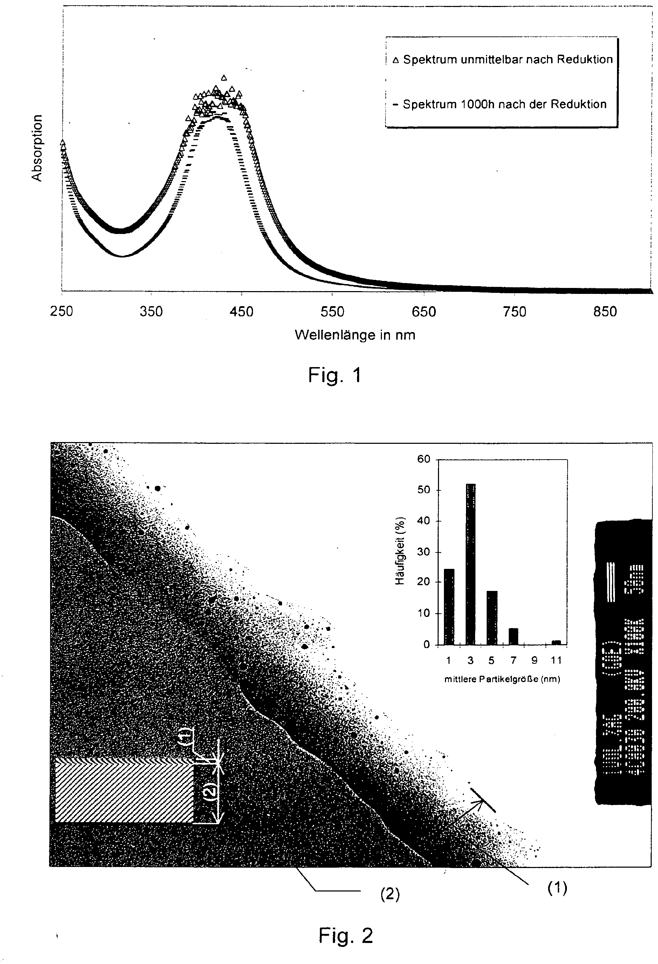

Ausgehend von einem amphiphil modifizierten dendritisch verzweigten Makromolekül basierend auf einem am Markt kommerziell und im technischen Maßstab verfügbaren hochverzweigtem Polyethylenimin , wie es zum Beispiel von der BASF AG unter dem Produktnamen "Lupasol WF" vertrieben wird, mit einem Modifizierungsgrad im molaren Verhältnis von Hexadecansäure zu Polyethylenimin von 1 : 0,007 wird durch Rühren in Toluol bei Raumtemperatur eine Lösung A hergestellt. Anschließend wird eine entsprechende Metallverbindung zugegeben und für mehrere Stunden gerührt. Exemplarisch sei hier das Metallsalz Silbercarbonat in einem Verhältnis von 1 zu 8 {beziffert das Verhältnis Ag-($Ag^+$) zu N-Atomen des dendritischen Makromolekülgrundgerüstes in der Lösung durch Rühren über Nacht in einem verschlossenen zweckdienlichen Glasgefäß unter Ausschluss von Lichteinwirkung aufgelöst. Es resultiert eine klare, leicht gelb-bräunliche Lösung. Die Lösung mit der komplexometrisch gelösten Metallverbindung zeigt keine Abweichung des UV-Vis-Absorptionsverhaltens im Vergleich zur reinen Lösung des dendritischen Makromoleküles und ist unter Lichtausschluss längere Zeit stabil. Unter Lichteinwirkung kann bei bestimmten Metallverbindungen bereits eine teilweise Reduktion der Metallionen eintreten. Zur Reduktion der intramolekular komplexierten Metallionen wird eine entsprechende Menge eines Reduktionsmittels, insbesondere einer Metallhydridverbindung, vorzugweise Natriumborhydrid ($NaBH_4$), im Allgemeinen im Überschuss, bezogen auf das Verhältnis Ag ($Ag^+$) zu H ($H^-$), in destilliertem Wasser gelöst (Lösung B). Das molare Verhältnis Ag : H ist $\geq 1$, vorzugsweise beträgt das molare Verhältnis 1 : 2 bis 1 : 16. Eine frische Lösung des Reduktionsmittels wird unter Beschleierung mit Stickstoff in einem geeigneten Reaktionsgefäß vorgelegt und anschließend behutsam mit der hergestellten Lösung A überschichtet. Es bildet sich ein stabiles Zweiphasensystem nach Zusammenführen beider Lösungen aus. Es ist keine Metaphasenbildung an der Phasengrenze der Lösungen A, B zu beobachten. Sobald die beiden nicht mischbaren Phasen miteinander im Kontakt stehen, kann die eintretende Reduktion der Metallionen an einem allmählichen homogenen Farbumschlag in der organischen Phase verfolgt werden. Im vorliegendem Fall einer Silbernanopartikeldispersion resultiert in Abhängigkeit der Silberkonzentration eine klare, intensiv gelblich-braun bis tiefbraun gefärbte organische Phase (Lösung A). Dagegen tritt keine Färbung der wässrigen Phase auf, wie es bei Auswaschen von Metallionen und unter Einwirkung des Reduktionsmittels der zu erwartende Fall wäre. Auch eine Ausfällung der Metallnanopartikel in die wässrige Phase wird nicht beobachtet. Nach 45 Minuten wird die Reduktionsreaktion beendet und etwaige unerwünschte Sekundärreaktionen dadurch unterbunden, dass die beiden Phasen getrennt bzw. die Produktphase (Lösung A) separiert wird. Dies lässt sich vergleichsweise einfach und sehr präzise, d.h. mit hohen Produktausbeuten, zum Beispiel durch Verwendung eines Scheidetrichters oder dergleichen realisieren. Das Produkt, die Silbernanopartikeldispersion, zeigt einen charakteristischen Absorptionspeak (Plasmonenresonanzpeak) bei 422 nm Lichtwellenlänge (2,94 eV) mit einer geringen Halbwertsbreite im UV/Vis-Spektrum, was auf weitgehend sphärische Silbernanopartikel einheitlicher Größe hindeutet. Die so erlangte Metallnanopartikeldispersion ist, aufbewahrt in einem geeigneten und dicht verschließbaren Gefäß, ohne weitere Vorkehrungen für mehrere Wochen bis Monate stabil. Es treten keine Ausfällungen in Erscheinung, was sich auch in einem charakteristischen zeitlich konstanten UV-Vis-Absorptionsspektrum bestätigt findet, wie in Figur 1 zu erkennen.

Beispiel 2: Applizieren einer nach Beispiel 1 erhaltenen Metallnanopartikeldispersion

Auf ein Polymersubstrat aus Polyethylenterephthalat (PET) in Form einer Folie wurde eine gemäß Beispiel 1 hergestellte Silbernanopartikeldispersion durch Rakeln mit einer Nassfilmdicke von 4um bei Raumtemperatur flächig homogen aufgebracht. Die Trocknung der applizierten Nassschicht erfolgte zunächst unter einem Abzug bei Raumtemperatur, abschließend konnten Lösungsmittelreste bei Temperaturen bis zu 45°C unter Vakuum entfernt werden. Die resultierende flexibel haftende, bis zu 12 Gew-% an Silber enthaltende Schicht weist eine Trockenfilmdicke von 25nm bis 100nm auf und ist nahezu farblos und hochtransparent. Transmissionselektronenmikroskopische Untersuchungen ließen eine homogene Verteilung an Silbernanopartikeln mit Durchmessern zwischen 1 nm und 11 nm innerhalb der aufgebrachten Polymerschicht erkennen, wie Figur 2 zeigt.

Beispiel 3: Untersuchungen an einem gemäß Beispiel 1 bis 2 hergestellten Produkt

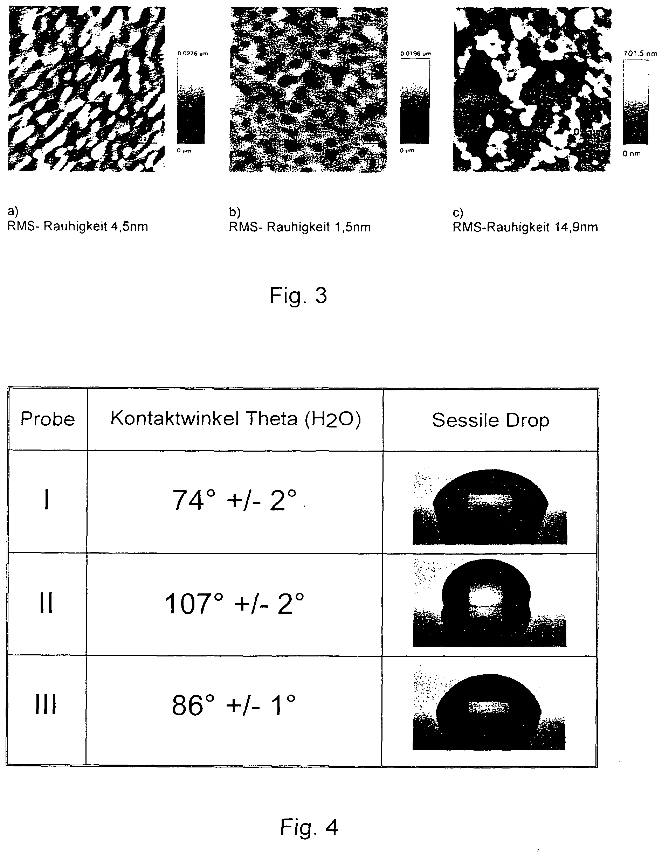

Messungen ergaben eine unverändert hohe Transparenz des beschichteten Materials im Vergleich mit dem unbeschichteten Substratmaterial (80 - 85% Transmission bei 500nm Wellenlänge), was einen nanodispersen Zustand ohne Agglomeratbildung bezeugt. Der Silbergehalt in der Beschichtung entspricht dem theoretischen Erwartungswert im Rahmen der Genauigkeit der verwendeten atomabsorptionsspektroskopischen Detektionsmethode (Flammen-ASS nach trockener Veraschung und Aufschluss in $HNO_3$), was typischerweise einer Konzentration von 30 bis 300ppm an Silber in Abhängigkeit der applizierten Schichtdicke und bezogen auf das Gesamtgewicht einer oberflächlich ausgerüsteten, ca. 100$\mu$m dicken PET-Substratfolie entspricht. Figur 3 zeigt, dass die Ausrüstung zu einer Glättung der Oberflächenrauhigkeit des Substrates im submikronen Auflösungsbereich führt, was zu ausgeprägt hydrophoben Oberflächen beiträgt, wie der in Figur 4 dargestellte repräsentative Vergleich der Kontaktwinkel des Polyestersubstrates mit und ohne Ausrüstung offenbart. Hierdurch wird eine Anhaftung von Schmutz im Allgemeinen und damit auch von potentiellen Nährböden für Mikroorganismen und Keime, sowie eine Erstbesiedlung von Mikroorganismen im Allgemeinen präventiv erschwert.

Eluationsversuche im wässrigen Medium ergaben eine Silberionenfreisetzung von 0,025mg Ag/Liter nach Auslagerung für 24h bei Raumtemperatur, so dass ein einfaches Auswaschen der Metallnanopartikel ausgeschlossen werden kann, wie auch durchgeführte Prüfungen im Agardiffusionsplattentest gemäß DIN EN ISO 20645 bestätigen. Zudem ist auch nach mehreren Wochen Auslagerungszeit, selbst bei pH-Werten von 3,5 bis 4 keine Desorption, ein Ablösen oder Abwaschen der applizierten Schichten aufgetreten, was deren hinlängliche Wechselwirkung mit der Substratoberfläche demonstriert, womit eine adäquate Haftung der applizierten Funktionsschicht bezeugt wird.

Eine das Bakterienwachstum hemmende Wirkung der mit Silbernanopartikeln ausgerüsteten beschichteten Oberflächen konnte für die Testkeime Staphylococcus aureus ATCC 6538 (gram(+)Bakt.) und Klebsiella pneumoniae ATCC 4352 (gram(-)Bakt.) nach Prüfung in Anlehnung an die Norm JIS L 1902 nachgewiesen werden. Die Ergebnisse sind in der nachfolgenden Tabelle zusammengestellt. Dabei ermittelt sich die antibakterielle Gesamtaktivität nach folgender Berechnungsgleichung:

$$\text{Log KBE (IWK)}_{18h} - \text{log KBE(Probe)}_{18h} = \text{antibakterielle Gesamtaktivität}$$

Hierin steht die Abkürzung KBE für die Zahl der keimbildenden Einheiten und IWK für eine Bezugsgröße der internen Wachstumskontrolle nach 18h Inkubationszeit, deren Wert anhand einer gleichartigen Oberflächenbeschichtung, welche jedoch keinerlei Metallnanopartikel enthielt (Referenzmaterial) ermittelt wurde. Das Referenzmaterial selbst wies unter den gleichen Versuchsbedingungen keinerlei antibakterielle Aktivität auf. Die Ergebnisse der Prüfungen sind Tabelle 1 zu entnehmen.

Tabelle 1:

| Testkeime | Inkubations-zeit | Mittelwert (KBE) | Mittelwert log KBE | Gesamtaktivität bezogen auf IWK | Beurteilung |
|---|---|---|---|---|---|
| gram (+) Bakt. | 18 h | 8,25E+04 | 4,92 | 1,23 | Signifikante antibakterielle Wirkung |
| gram (-) Bakt. | 18 h | 6,40E+03 | 3,81 | 3,23 | Starke antibakterielle Wirkung |

Beispiel 4: Untersuchungen an einem analog Beispiel 1 bis 2 hergestellten Produkt, wobei ein niedrigerer Modifizierungsgrad des zugrundeliegenden dendritischen Makromoleküles gewählt wurde

Das amphiphil modifizierte dendritisch verzweigte respektive verzweigte Ausgangsmaterial ist gelblich, von wachsartiger Konsistenz und weist zwei Schmelzpeaks in der DCS-Analyse bei ca. 43°C und 53°C auf.

UV/Vis-spektroskopische Messungen ergaben eine unverändert hohe Transparenz des durch Applizieren einer entsprechenden Silbernanopartikeldispersion beschichteten Materials im Vergleich mit dem unbeschichteten Substratmaterial (80 bis 85% Transmission bei 500nm Wellenlänge).

Eluationsversuche im wässrigen Medium ergaben für die Silbernanopartikel enthaltenden beschichteten Materialproben eine Silberionenfreisetzung von 0,04mg Ag/Liter nach Auslagerung für 24h bei Raumtemperatur. Ein einfaches Auswaschen der Metallnanopartikel tritt demnach nicht auf, wie es auch durch Prüfungen im Agardiffusionsplattentest gemäß DIN EN ISO 20645 bestätigt wird. Zudem ist auch nach mehreren Wochen Auslagerungszeit, selbst bei pH-Werten von 3,5 bis 4 keine Desorption, ein Ablösen oder Abwaschen der applizierten Schichten aufgetreten.

Eine das Bakterienwachstum hemmende Wirkung der mit Silbernanopartikeln ausgerüsteten beschichteten Oberflächen wurde analog nach der in Beispiel 3 beschriebenen Testmethode verifiziert. Die mikrobielle Wirkung auf die Testkeime Staphylococcus aureus ATCC 6538 (gram(+)Bakt.) und Klebsiella pneumoniae ATCC 4352 (gram(-)Bakt.) ist in Tabelle 2 zusammengestellt.

Tabelle 2:

| Testkeime | Inkubations-zeit | Mittelwert (KBE) | Mittelwert log KBE | Gesamtaktivität bezogen auf IWK | Beurteilung |
|---|---|---|---|---|---|
| grad(+) Bakt. | 18 h | 1,00E+03 | 3,00 | 3,15 | Starke antibakterielle Wirkung |
| grad(-) Bakt. | 18 h | 6,67E+01 | 1,82 | 5,22 | Starke antibakterielle Wirkung |

Ein gleichermaßen getestetes Referenzmaterial ohne Metallnanopartikel (Bakteriozid) zeigte wiederum selbst keinerlei antibakterielle Aktivität.

Beispiel 5: Untersuchungen an einem analog Beispiel 1 bis 2 hergestellten Produkt, wobei ein doppelt so hoher Silbergehalt, wie in Beispiel 1 gewählt wurde

UV/Vis-spektroskopische Messungen ergaben eine unverändert hohe Transparenz des durch Applizieren einer entsprechenden Silbernanopartikeldispersion beschichteten Materials im Vergleich mit dem unbeschichteten Substratmaterial (80 bis 85% Transmission bei 500nm Wellenlänge).

Eluationsversuche im wässrigen Medium ergaben für die Silbernanopartikel enthaltenden beschichteten Materialproben eine Silberionenfreisetzung von 0,07mg Ag/Liter nach Auslagerung für 24h bei Raumtemperatur. Ein einfaches Auswaschen der Metallnanopartikel tritt demnach nicht auf, wie auch durchgeführte Prüfungen im Agardiffusionsplattentest gemäß DIN EN ISO 20645 bestätigen.

Beispiel 6: Untersuchungen an einem adäquat zu Beispiel 1 bis 2 hergestellten Produkt, wobei eine nichtkovalente Modifizierung mit n-Hexadecansäure gewählt wurde

Nach gleichzeitigem Lösen der organischen Komponenten in Toluol und dem anschließenden komplexometrischen Auflösen der Metallverbindung wurde die Reduktion analog zu Beispiel 1 durchgeführt und die so erhaltene Silbernanopartikeldispersion gleichsam Beispiel 2 appliziert.

UV/Vis-spektroskopische Messungen ergaben eine unverändert hohe Transparenz des durch Applizieren einer entsprechenden Silbernanopartikeldispersion beschichteten Materials im Vergleich mit dem unbeschichteten Substratmaterial von ca. 80 - 85% Transmission bei 500nm Wellenlänge.

Eluationsversuche im wässrigen Medium ergaben für die Silbernanopartikel enthaltenden beschichteten Materialproben eine Silberionenfreisetzung von 0,07mg Ag/Liter nach Auslagerung für 24h bei Raumtemperatur. Ein einfaches Auswaschen der Metallnanopartikel tritt auch in diesem Fall nicht auf, wie auch durch Prüfungen im Agardiffusionsplattentest gemäß DIN EN ISO 20645 bestätigt wird.

Beispiel 7: Untersuchungen an einer adäquat zu Beispiel 1 hergestellten Metallnanopartikeldispersion , wobei bei gleicher Gesamtbeladung eine Kombination aus Silber- und Kupfernanopartikeln im molarem Verhältnis 1:1 verwendet wurde

Herstellung der Metallnanopartikeldispersion analog Beispiel 1, jedoch wurde in der Toluollösung des amphiphilen dendritisch verzweigten Makromoleküles sowohl Silberacetat als auch Kupferactetat in einem Verhältnis von jeweils 1 zu 16 {beziffert das Verhältnis Ag- bzw. Cu-Ionen- zu N-Atomen des dendritischen Makromolekülgrundgerüstes} durch Rühren über Nacht aufgelöst.

Die Lösung der komplexierten Metallionen wies als Folge der additiven Farbmischung mit dem typischer Weise blauen $Cu^{2+}$ Komplexen eine grünliche Farbe auf. Durch Reduktion gemäß Beispiel 1 wurde eine stabile tief braune Metallnanopartikeldispersion erhalten, welche photospektroskopisch eine schwache Absorption bei 600nm, typisch für Kupfernanopartikel, und bei 428nm einen signifikanten Absorptionspeak, typisch für die enthaltenen Silbernanopartikel, auswies. UV/Vis-transmissionsspektroskopische Messungen ergaben eine unverändert hohe Durchlässigkeit des durch Applizieren einer entsprechenden Nanopartikeldispersion beschichteten Materials im Vergleich mit dem unbeschichteten Substratmaterial. Eluationsversuche im wässrigen Medium ergaben eine Metallionenfreisetzung von 0,014mg Ag/Liter und 0,018mg Cu/Liter nach Auslagerung für 24h bei Raumtemperatur. Ein einfaches Auswaschen der Metallnanopartikel tritt auch in diesem Fall nicht auf, wie auch durch Prüfungen im Agardiffusionsplattentest gemäß DIN EN ISO 20645 bestätigt wird.

Beispiel 8: Untersuchungen an einer Hybridschicht, umfassend Silber und Titanoxid-Nanopartikel in Analogie zu Beispiel 1 bis 3

Zu einer Metallnanopartikeldispersion, hergestellt wie in Beispiel 1 beschrieben, wurde unmittelbar vor dem eigentlichen Applikationsprozess eine Lösung von einem dendritisch hochverzweigtem Polyol (5g/Liter) und Tetrapropylorthotitanat im molaren Verhältnis von 1:30 in Azeton zugegeben. Nach dem homogenen Vermischen beider Lösungen wurde die resultierende Lösung mit einer Nassfilmdicke von $4\mu m$ bei Raumtemperatur flächig homogen durch Rakeln auf einer Polyestersubstratfolie aufgebracht. Die Trocknung der applizierten Nassschicht erfolgte zunächst unter einem Abzug bei Raumtemperatur. Eine anschließende kurzzeitige Auslagerung in destilliertem Wasser diente der vollständigen Entwicklung (Hydrolyse und Kondensation) der inkorporierten Titanoxidnanopartikel. Nach einer abschließenden Trocknung resultierte eine flexibel haftende, Silber- und Titanoxidnanopartikel enthaltende mehrphasig aufgebaute Schicht (Figur 3c) mit einer Trockenfilmdicke von 50nm bis 100nm. Die oberflächliche Ausrüstung beeinflusst die Transparenz des Substratwerkstoffes nicht, so dass eine hochtransparente und nahezu farblose Funktionsschicht mit erhöhter Benetzbarkeit gegenüber polaren Medien, insbesondere Wasser resultierte, wie Figur 4 zeigt. Transmissionselektronenmikroskopische Untersuchungen ließen eine homogene Verteilung an Silber- und Titanoxid-Nanopartikeln mit Durchmessern zwischen 1 nm und 11 nm innerhalb der aufgebrachten Polymerschicht erkennen.

Eluationsversuche im wässrigen Medium ergaben eine Metallionenfreisetzung von 0,04mg Ag/Liter nach Auslagerung für 24h bei Raumtemperatur. Eine Desorption bzw. ein Ablösen oder Abwaschen der applizierten Schichten trat zudem bei Auslagerung in Wasser mit pH 4 nicht auf, was eine hinlängliche Wechselwirkung der Ausrüstungsschicht mit der Substratoberfläche demonstriert.

Vergleichsbeispiel 9: Vergleichsexperiment zu Beispiel 1, wobei eine homogene Reduktion mit Superhydrid in wasserfreiem Toluol durchgeführt wurde

Eine gemäß Beispiel 1 hergestellte Lösung, die aufgelöste Silbersalzverbindung enthaltend, wurde durch Zugabe einer Lösung von Superhydrid in wasserfreiem Toluol reduziert. Zur vollständigen Reduktion wurde das Reduktionsmittel in einem molaren Verhältnis von 1 : 2 eingesetzt und das Reaktionsgemisch für 1h unter Beschleierung mit Stickstoff gerührt. Die unmittelbar eintretende Reduktion der Silberionen nach Zugabe des Reduktionsmittels ist an einem unverzüglichen Farbumschlag der farblosen Toluollösung hin zu einer intensiv gelb-braunen bis tiefbraunen Farbe zu erkennen. Die erhaltene Silbernanopartikeldispersion, zeigt einen charakteristischen Absorptionspeak infolge der Plasmonenresonanz der Silbernanopartikel bei 415 nm Lichtwellenlänge (ca. 3 eV) mit einer schmalen Halbwertsbreite im UV/Vis-Spektrum. Die so hergestellte Metallnanopartikeldispersion ließ nach Aufbewahrung in einem geeigneten und dicht verschließbaren Gefäß ohne weitere Vorkehrungen innerhalb von 48h erste Ausfällungen in Form eines feinen schwarzen Niederschlags erkennen.

Vergleichsbeispiel 10: Vergleichsexperiment zu Beispiel 1 mit unmodifiziertem hochverzweigten Polyethylenimin in Wasser

Das gleiche Beispiel 1 zugrundeliegende dendritisch verzweigte Makromolekül wurde in Wasser unter Rühren gelöst. Anschließend die Lösung mit Silbernitrat versetzt. Die klare, vollständige Lösung aller Komponenten wurde mit einer gemäß Beispiel 1 adäquaten Menge an Natriumborhydrid homogen reduziert. Die unmittelbar eintretende Reduktion der Metallionen ist an einem unverzüglichen Farbumschlag der farblosen Lösung hin zu einer intensiv gelb-braunen bis tiefbraunen Farbe nach Zugabe des Reduktionsmittels zu erkennen. Die resultierende wässrige Silbernanopartikeldispersion, zeigt einen charakteristischen Plasmonenresonanzpeak bei 412 nm Lichtwellenlänge (3,0 eV) mit einer schmalen Halbwertsbreite im UV/Vis-Spektrum. Die Metallnanopartikeldispersion ist aufbewahrt in einem geeigneten und dicht verschließbaren Gefäß innerhalb 24h Stunden komplett in Form eines schwarzen Niederschlages ausgefallen.

Es ist anhand der dargestellten Beispiele zu erkennen, dass nach dem erfindungsgemäßen Verfahren auf einfache Art und Weise stabile Metallnanopartikeldispersionen erhalten werden, wie sie unter anderem für die antimikrobielle Ausrüstung von Produkten geeignet sind, insbesondere durch Beschichtungen mit diesen Partikeldispersionen. Die nach dem erfindungsgemäßen Verfahren hergestellten Nanopartikeldispersionen zeichnen sich durch eine hohe Lagerfähigkeit besonders aus, wodurch zeitlich konstante Produkteigenschaften gewährt werden können. Dabei erlaubt das Verfahren die Steuerung der Eigenschaften der Partikeldispersion bzw. der Metallnanopartikel-Hybrid-Materialien durch eine geeignete Wahl der Reaktionsbedingungen, Zusammensetzungen und Lösungsmittelauswahl. So zeigen beispielsweise unbehandelte Polymeroberflächen innerhalb kürzester Zeit ein ungehemmtes Bakterienwachstum, während die durch Beschichtung mit den Nanopartikeldispersionen ausgerüsteten Oberflächen deutlich antimikrobielle, das Bakterienwachstum hemmende Eigenschaften aufweisen, ohne dass dabei die Metallnanopartikel ausgewaschen werden.

Weiterhin lassen die Beispiele erkennen, dass zum einen die antimikrobielle Intensität durch die Freisetzungsrate der bakteriozid wirkenden Metallionen infolge der Konzentration an Metallnanopartikeln (Beispiel 3, 5), zum anderen aber auch durch Variation der amphiphilen Balance durch entsprechende Wahl des Modifizierungsgrades vorzugsweise terminaler Gruppen des dendritisch verzweigten Makromoleküles und / oder der Modifizierungsreagenz, insbesondere der Alkylkettenlänge gesteuert werden kann (Beispiel 3, 4). Die nach dem erfindungsgemäßen Verfahren erhaltenen Metallnanopartikeldispersionen bieten somit einen weiten Bereich an Variationsbreite, um die daraus resultierenden Produkte an applikationsspezifische Erfordernisse auf einfache Weise anzupassen.

Das erfindungsgemäße Verfahren zeichnet sich somit durch eine schnelle und exakt zeitlich steuerbare Reduktion von in Kern-Schale-artigen dendritisch verzweigten Makromolekülen komplexierten Metallionen aus, welches in hoher Ausbeute die Darstellung von lagerstabilen Metallnanopartikeldispersionen hoher Reinheit gestattet. Des Weiteren bedient sich das erfindungsgemäße Verfahren vorzugsweise ausschließlich gebräuchlicher am Markt verfügbarer Rohstoffe und Substanzen. Ebenso ist es in möglichst wenigen Verfahrensschritten, insbesondere ohne eine weitere Aufbereitung, zum Beispiel der Aufarbeitung zur Entfernung von Nebenprodukten oder Hilfschemikalien wie zum Beispiel durch Waschen, Filtration und / oder Lösungsmittelaustausch, für einen Produktionsmaßstab skalierbar.

Da das erfindungsgemäße Verfahren mit vergleichsweise preiswerten Rohstoffen und Chemikalien ohne besonderen Schutzvorkehrungen und speziellen apparativen Aufwand (z.B. Arbeiten unter Wasserausschluss) betrieben bzw. umgesetzt werden kann, sind auch die Ausrüstung von beispielsweise Wegwerf-, Einweg- und / oder Biomaterialien effizient darstellbar.

Es versteht sich, dass die vorstehend genannten Merkmale nicht nur in der jeweils angegebenen Kombination, sondern auch in anderen Kombinationen verwendbar sind, ohne den Rahmen der Erfindung zu verlassen.

## Patentansprüche

1. Verfahren, zur Herstellung von Metallnanopartikeldispersionen, **gekennzeichnet durch** folgende Verfahrensschritte,

   a) Herstellung eines Zwei-Phasen-Schichtensystems, gebildet aus einer organischen Phase und einer reduzierenden Phase, wobei die organische Phase in einem geeigneten Lösungsmittel gelöste amphiphile dendritisch verzweigte Makromoleküle und darin komplexierte Ionen eines Metalls oder mehrere unterschiedliche Metallionen enthält und die reduzierende Phase nicht mit der organischen Phase mischbar ist,
   b) Überschichten der beiden Phasen und Reduktion der zuvor in dem dendritisch verzweigten Makromolekül komplexierten Metallionen an der Phasengrenze dieses zweiphasigen Systems und

c) Beenden der Reduktionsreaktion durch Trennen der zwei Phasen und Bildung einer lagerstabilen Dispersion feinstverteilter Metallnanopartikel.

2. Verfahren zur Herstellung von Metallnanopartikeldispersionen nach Anspruch 1, **gekennzeichnet dadurch, dass** die Metallionen aus Salzen der Übergangsmetalle gebildet werden, wobei die Metallionen sowohl monovalente Metallionen wie Silber, teilweise auch Gold und/oder Kupfer, bivalente Metallionen, wie Zink, Kupfer, Nickel, Cadmium, Platin, Palladium oder Gold, und/oder auch trivalente Metallionen, wie Eisen oder Rhodium sind.

3. Verfahren zur Herstellung von Metallnanopartikeldispersionen nach Anspruch 1, **gekennzeichnet durch** Metallionen, gebildet aus Metallkomplexverbindungen, wobei die jeweils verwendete Metallkomplexverbindung eine geringere chemische Stabilität als der Komplex mit dem zugrunde liegenden dendritisch verzweigten Makromolekül aufweist.

4. Verfahren zur Herstellung von Metallnanopartikeldispersionen nach Anspruch 1, **dadurch gekennzeichnet, dass** das amphiphile dendritisch verzweigte Makromolekül ein aliphatisches Polyethylenimin oder ein Polyesteramid ist und welches unter anderem stickstoffhaltige innere und/oder endständige Gruppen besitzt oder ein aliphatischer Polyester oder anderes Polyol ist und neben Hydroxylgruppen vorzugsweise auch stickstoffhaltige Gruppen, eingeführt durch eine entsprechende Modifizierung des dendritischen Makromolekülgrundgerüstes, trägt.

5. Verfahren zur Herstellung von Metallnanopartikeldispersionen nach Anspruch 1, **dadurch gekennzeichnet, dass** die organische Phase ein amphiphiles dendritisch verzweigtes Makromolekül in gelöster Form in einer Konzentration zwischen 0,25g/Liter und 250g/Liter enthält.

6. Verfahren zur Herstellung von Metallnanopartikeldispersionen nach Anspruch 1, **dadurch gekennzeichnet, dass** die in der organischen Phase gelösten amphiphilen dendritisch verzweigten Makromoleküle durch kovalente Modifizierung von vorzugsweise terminalen Gruppen mit geeigneten linearen oder auch verzweigten Alkylketten mit 6 bis 22, vorzugsweise 8 bis 16 Kohlenstoffatomen, wobei ein Teil der insbesondere terminalen Gruppen ein nach außen orientierten aliphatischen Rest einer Fettsäure aufweist, oder durch eine nichtkovalente Modifizierung mit geeigneten Alkylketten mit 6 bis 22 Kohlenstoffatomen, durch Micellbildung (Polyelektrolyt-Surfactant-Komplex) amphiphil nach außen hydrophob eingestellt sind und der Modifizierungsgrad an endständig funktionellen Gruppen mit geeigneten linearen oder auch verzweigten Alkylketten mit 6 bis 22 Kohlenstoffatomen zwischen 25% und 100% beträgt.

7. Verfahren zur Herstellung von Metallnanopartikeldispersionen nach Anspruch 1, **dadurch gekennzeichnet, dass** die reduzierende Phase nicht oder nur in sehr geringem Maße mit der organischen Phase mischbar ist, und auf einem polaren Lösungsmittel basiert oder vorzugsweise eine wässrige Phase ist.

8. Verfahren zur Herstellung von Metallnanopartikeldispersionen nach Anspruch 7, **dadurch gekennzeichnet, dass** die reduzierende Phase ein geeignetes Reduktionsmittel in Form einer Metallhydridverbindung oder von wasserlöslichen Verbindungen von Salzen reduzierender Säuren, wie Natriumborhydrid enthält, wobei das Reduktionsmittel typischer Weise in einem molaren Verhältnis zwischen 1 : 0,5 und 1 : 10 eingesetzt wird.

9. Verfahren zur Herstellung von Metallnanopartikeldispersionen nach Anspruch 1, **dadurch gekennzeichnet, dass** die Reduktionsreaktion zur Überführung der Metallionen in ihre metallische Form bei einer Temperatur zwischen -25°C und unterhalb der tiefsten Siedetemperatur einer der beiden Phasen stattfindet.

10. Verfahren zur Herstellung von Metallnanopartikeldispersionen nach Anspruch 1, **dadurch gekennzeichnet, dass** die Reduktionsreaktion zur Überführung der Metallionen in ihre metallische Form zeitlich exakt durch einfaches Beenden der Reaktion bei Trennung der Phasen gesteuert wird, wobei die Reaktionszeit unter anderem abhängig von der Metallionenkonzentration ist.

## Claims

1. Process for producing metal nanoparticle dispersions, **characterized by** the following process steps:

    a) production of a two-phase layer system formed by an organic phase and a reducing phase, where the organic phase contains amphiphilic dendritically branched macromolecules dissolved in a suitable solvent and ions of a metal or a plurality of different metal ions complexed therein and the reducing phase is not miscible with the organic phase,

b) superposition of the two phases in layers and reduction of the metal ions previously complexed in the dendritically branched macromolecule at the phase interface of this two-phase system and

c) ending of the reduction reaction by separation of the two phases and formation of a storage-stable dispersion of very finely divided metal nanoparticles.

2. Process for producing metal nanoparticle dispersions according to Claim 1, **characterized in that** the metal ions are formed from salts of the transition metals, where the metal ions are monovalent metal ions such as silver, sometimes also gold and/or copper, bivalent metal ions such as zinc, copper, nickel, cadmium, platinum, palladium or gold and/or trivalent metal ions such as iron or rhodium.

3. Process for producing metal nanoparticle dispersions according to Claim 1, **characterized by** metal ions formed from metal complexes, where the metal complex used in each case has a lower chemical stability than the complex with the parent dendritically branched macromolecule.

4. Process for producing metal nanoparticle dispersions according to Claim 1, **characterized in that** the amphiphilic dendritically branched macromolecule is an aliphatic polyethylenimine or a polyesteramide and has, inter alia, nitrogen-containing internal and/or terminal groups or is an aliphatic polyester or other polyol and bears not only hydroxyl groups but preferably also nitrogen-containing groups introduced by appropriate modification of the dendritic macromolecule skeleton.

5. Process for producing metal nanoparticle dispersions according to Claim 1, **characterized in that** the organic phase contains an amphiphilic dendritically branched macromolecule in dissolved form in a concentration in the range from 0.25 g/Litre to 250 g/Litre.

6. Process for producing metal nanoparticle dispersions according to Claim 1, **characterized in that** the amphiphilic dendritically branched macromolecules dissolved in the organic phase have been made amphiphilic and hydrophobic on the outside by micelle formation (polyelectrolyte-surfactant complex) by covalent modification of preferably terminal groups with suitable linear or else branched alkyl chains having from 6 to 22, preferably from 8 to 16, carbon atoms, where part of the in particular terminal groups has an outwards-pointing aliphatic radical of a fatty acid or by noncovalent modification with suitable alkyl chains having from 6 to 22 carbon atoms and the degree of modification at terminal functional groups with suitable linear or else branched alkyl chains having from 6 to 22 carbon atoms is in the range from 25 % to 100 %.

7. Process for producing metal nanoparticle dispersions according to Claim 1, **characterized in that** the reducing phase is immiscible or miscible to only a very small extent with the organic phase and is based on a polar solvent or preferably is an aqueous phase.

8. Process for producing metal nanoparticle dispersions according to Claim 7, **characterized in that** the reducing phase contains a suitable reducing agent in the form of a metal hydride compound or of water-soluble compounds of salts of reducing acids, for example sodium borohydride, where the reducing agent is typically used in a molar ratio in the range from 1 : 0.5 to 1 : 10.

9. Process for producing metal nanoparticle dispersions according to Claim 1, **characterized in that** the reduction reaction for converting the metal ions into their metallic form takes place at a temperature in the range from -25 °C to below the lowest boiling point of one of the two phases.

10. Process for producing metal nanoparticle dispersions according to Claim 1, **characterized in that** the reduction reaction for converting the metal ions into their metallic form is controlled exactly over time by simple ending of the reaction on separation of the phases, where the reaction time is, inter alia, dependent on the metal ion concentration.

**Revendications**

1. Procédé de fabrication de dispersions de nanoparticules métalliques, **caractérisé par** les étapes de procédé suivantes :

a) fabrication d'un système en couches à deux phases, formé d'une phase organique et d'une phase réductrice, la phase organique contenant des macromolécules ramifiées de façon dendritique, amphiphiles et dissoutes dans un solvant approprié et des ions d'un métal complexés à l'intérieur ou plusieurs ions métalliques différents et la phase réductrice n'étant pas miscible avec la phase organique,

b) recouvrement des deux phases et réduction des ions métalliques préalablement complexés dans la macromolécule ramifiée de façon dendritique au niveau de la limite de phase de ce système à deux phases et

c) fin de la réaction de réduction par séparation des deux phases et formation d'une dispersion stable au stockage de nanoparticules métalliques finement divisées.

2.  Procédé de fabrication de dispersions de nanoparticules métalliques selon la revendication 1, **caractérisé en ce que** les ions métalliques sont formés à partir de sels des métaux de transition, les ions métalliques étant des ions métalliques monovalents tels que l'argent, en partie aussi l'or et/ou le cuivre, des ions métalliques bivalents tels que le zinc, le cuivre, le nickel, le cadmium, le platine, le palladium ou l'or, et/ou des ions métalliques trivalents tels que le fer ou le rhodium.

3.  Procédé de fabrication de dispersions de nanoparticules métalliques selon la revendication 1, **caractérisé par** des ions métalliques, formés à partir de composés complexes métalliques, le composé complexe métallique respectivement utilisé présentant une stabilité chimique inférieure à celle du complexe avec la macromolécule de base ramifiée de façon dendritique.

4.  Procédé de fabrication de dispersions de nanoparticules métalliques selon la revendication 1, **caractérisé en ce que** la macromolécule ramifiée de façon dendritique et amphiphile est une polyéthylèneimine aliphatique ou un polyesteramide et a entre autres des groupes internes et/ou terminaux contenant de l'azote ou est un polyester aliphatique ou un autre polyol et porte, outre des groupes hydroxyle, de préférence aussi des groupes contenant de l'azote, introduits par une modification correspondante de la structure fondamentale dendritique de la macromolécule.

5.  Procédé de fabrication de dispersions de nanoparticules métalliques selon la revendication 1, **caractérisé en ce que** la phase organique contient une macromolécule ramifiée de façon dendritique et amphiphile sous une forme dissoute avec une concentration comprise entre 0,25 g/litre et 250 g/litre.

6.  Procédé de fabrication de dispersions de nanoparticules métalliques selon la revendication 1, **caractérisé en ce que** les macromolécules ramifiées de façon dendritique, amphiphiles et dissoutes dans la phase organique sont rendues amphiphiles hydrophobes vers l'extérieur par modification covalente de groupes de préférence terminaux avec des chaînes alkyle appropriées, linéaires ou aussi ramifiées, avec 6 à 22, de préférence 8 à 16, atomes de carbone, une partie des groupes notamment terminaux ayant un radical aliphatique d'un acide gras qui est orienté vers l'extérieur, ou par modification non covalente avec des chaînes alkyle appropriées avec 6 à 22 atomes de carbone, par formation de micelles (complexe polyélectrolyte-surfactant), et le degré de modification au niveau de groupes fonctionnels en terminaison avec des chaînes alkyle appropriées, linéaires ou aussi ramifiées, avec 6 à 22 atomes de carbone est compris entre 25 % et 100 %.

7.  Procédé de fabrication de dispersions de nanoparticules métalliques selon la revendication 1, **caractérisé en ce que** la phase réductrice n'est pas miscible avec la phase organique, ou seulement dans une très faible mesure, elle est basée sur un solvant polaire ou elle est de préférence une phase aqueuse.

8.  Procédé de fabrication de dispersions de nanoparticules métalliques selon la revendication 7, **caractérisé en ce que** la phase réductrice contient un agent réducteur approprié sous la forme d'un composé d'hydrure métallique ou de composés, solubles dans l'eau, de sels d'acides réducteurs tels que l'hydrure de bore-sodium, l'agent réducteur étant utilisé typiquement dans un rapport molaire compris entre 1:0,5 et 1:10.

9.  Procédé de fabrication de dispersions de nanoparticules métalliques selon la revendication 1, **caractérisé en ce que** la réaction de réduction pour le passage des ions métalliques dans leur forme métallique a lieu à une température comprise entre -25°C et une température inférieure à la plus basse température d'ébullition de l'une des deux phases.

10. Procédé de fabrication de dispersions de nanoparticules métalliques selon la revendication 1, **caractérisé en ce que** la réaction de réduction pour le passage des ions métalliques dans leur forme métallique est commandée précisément dans le temps en mettant simplement fin à la réaction par séparation des phases, le temps de réaction dépendant entre autres de la concentration d'ions métalliques.

Fig. 1

Fig. 2

a)
RMS- Rauhigkeit 4,5nm

b)
RMS- Rauhigkeit 1,5nm

c)
RMS-Rauhigkeit 14,9nm

Fig. 3

| Probe | Kontaktwinkel Theta (H2O) | Sessile Drop |
|-------|---------------------------|--------------|
| I | 74° +/- 2° | |
| II | 107° +/- 2° | |
| III | 86° +/- 1° | |

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003082133 A
- US 6224898 B
- DE 10323597
- US 3425549 A
- DE 60006373

**In der Beschreibung aufgeführte Nicht-Patentliteratur**

- **SONNY. S. MARK.** *Biomacromolecules,* vol. 7 (6), 1844 ff